# EUROPÄISCHE PATENTSCHRIFT

(11) **EP 2 231 440 B1**
(45) Veröffentlichungstag und Bekanntmachung des Hinweises auf die Patenterteilung: **31.08.2011**
(21) Anmeldenummer: 09702320.4
(22) Anmeldetag: 13.01.2009
(51) Int. Cl.: B60Q 5/00

(54) **AUSLÖSEVORRICHTUNG FÜR EINE HUPANLAGE EINES KRAFTFAHRZEUGS**
TRIGGERING DEVICE FOR A HORN SYSTEM OF A MOTOR VEHICLE
DISPOSITIF DE DÉCLENCHEMENT POUR UN SYSTÈME D'AVERTISSEUR SONORE D'UN VÉHICULE AUTOMOBILE

(30) Priorität: 17.01.2008 DE 102008004984
(43) Veröffentlichungstag der Anmeldung: 29.09.2010
(73) Patentinhaber: paragon AG, 33129 Delbrück (DE); TAKATA - PETRI AG, 63743 Aschaffenburg (DE)
(72) Erfinder: BÖCKSTIEGEL, Andreas, 33813 Oerlinghausen (DE); HANS, Andreas, 63843 Niedernberg (DE); KEMPF, Bernhard, 63839 Kleinwallstadt (DE)
(74) Vertreter: Lelgemann, Karl-Heinz
(86) Internationale Anmeldenummer: PCT/EP2009/000132
(87) Internationale Veröffentlichungsnummer: WO 2009/090031

(56) Entgegenhaltungen:
- WO-A-00/64710
- DE-A1- 4 016 047
- FR-A- 2 863 564
- US-A- 5 965 952

## Beschreibung

Die Erfindung bezieht sich auf eine Auslösevorrichtung für eine Hupanlage eines Kraftfahrzeugs nach dem oberbegriff des patentanspruchs 1.

Bei bekannten Auslösevorrichtungen wird ein Betätigungsglied um einen bestimmten Weg versetzt, so daß dann ein Hupvorgang ausgelöst wird. Im bzw. am Lenkrad muß daher die Möglichkeit zur Verfügung gestellt werden, ein entsprechendes Betätigungsglied um den Auslöseweg verstellen zu können. Hierdurch ergeben sich Beeinträchtigungen hinsichtlich des Designs von Lenkrädern, wobei unter Umständen die Ausgestaltung von Schlitzen, Spalten od.dgl. erforderlich ist, die die Dichtigkeit der Lenkradoberfläche reduzieren.

Die WO 00/64710A zeigt eine Auslösevorrichtung einer Hupanlage eines Kraftfahrzeugs, die gemeinsam mit einer Airbaganlage in die Lenkradsäule des Kraftfahrzeugs integriert ist. Die Auslösevorrichtung gibt ein Auslösesignal aus, wenn zwei durch einen geringfügigen Abstand voneinander getrennte Kontaktflächen durch Druckausübung auf einen radial inneren Bereich der Lenkradoberfläche in Berührung kommen.

Die US-A-5965952 zeigt eine in eine Lenkradsäule integrierte Auslösevorrichtung einer Hupanlage eines Kraftfahrzeugs, bei deren Ausgabe eines Auslösesignals mittels eines Mikrocontrollers und diesem zugeordneter Sensoren, z.B. eines Temperatursensors, sich mit der Temperatur und/oder der Alterung ändernde Werkstoffeigenschaften der Bauteile der Lenkradsäule und/oder der Auslösevorrichtung berücksichtigt werden.

Die FR-A-2863564 zeigt eine in eine Lenkradsäule integrierte Auslösevorrichtung einer Hupanlage eines Kraftfahrzeugs, bei der ein Auslösesignal ausgegeben wird, wenn mittels eines Abdeckteils, das im Nabenbereich an der Oberfläche des Lenkrads angeordnet ist, über Kontakte ein Stromkreis geschlossen wird.

Aus der DE 40 16 047 A1 ist eine Auslösevorrichtung für eine Hupanlage eines Kraftfahrzeugs bekannt, die in bzw. an einem Lenkrad des Kraftfahrzeugs integriert ist. Diese Auslösevorrichtung, die in Form eines Schalters ausgebildet ist, gibt ein Auslösesignal aus, wenn in der Auslösevorrichtung bzw. im Schalter erfasst wird, dass ein mechanischer Druck auf ein eingeschlossenes Medium ausgeübt wird. In der Auslösevorrichtung ist des weiteren ein Grenzwert vorgegeben, ab dessen Überschreiten das Auslösesignal ausgegeben wird. Dieser Auslösevorrichtung nachgeschaltet ist eine Auswerteeinheit, mittels der die Dauer der Ausgabe des Signals der Auslösevorrichtung erfasst wird. Durch diese Auswerteeinheit wird sichergestellt, dass die Hupanlage nur dann in Betrieb gesetzt wird, wenn der in der Auslösevorrichtung für den einen Parameter vorgegebene Grenz- oder Schwellwert für eine ebenfalls vorgebbare Mindestdauer überschritten wird.

Ausgehend von dem vorstehend geschilderten Stand der Technik liegt der Erfindung die Aufgabe zugrunde, eine Auslösevorrichtung für eine Hupanlage eines Kraftfahrzeugs zu schaffen, die den Designern von Lenkrädern größere Freiheiten läßt, die die Betriebssicherheit der Hupanlage besser gewährleistet wie bisher bekannte Auslösevorrichtungen, bei der eine kompakte Gestaltung des Lenkrads möglich ist und die darüber hinaus eine spalt- und schlitzfreie fluiddichte Gestaltung der Lenkradoberfläche zulässt.

Diese Aufgabe wird erfindungsgemäß durch die Makmale in kennzeichnenden Teil des Harptanspruchs gelöst

Erfindungsgemäß wird eine Auslösevorrichtung geschaffen, bei der ein Hupvorgang nur ausgelöst wird, wenn zwei mit einem Hupvorgang einhergehende Parameter vorliegen.

Hierdurch ist es z.B. möglich, die Auslösevorrichtung ohne ein in bezug auf das Lenkrad bzw. auf andere Bauteile des Lenkrads bewegliches Bauteil auszugestalten.

Wenn bei der Auslösevorrichtung die erste Auslöseeinheit eine Tastfläche ist, mittels der die Anlage einer Hand an einer Lenkradoberfläche erfaß- und bei Erfassen der Anlage der Hand an der Lenkradoberfläche das erste Auslösesignal ausgebbar ist, kann in jedem Fall verhindert werden, daß irgendwelche mechanischen Beanspruchungen der Lenkanlage, die z.B. beim Vorhandensein von Schlaglöchern etc., bei einem Aufprall od.dgl., auftreten können, ein Hupvorgang ausgelöst wird, da dasjenige Auslösesignal, welches das Vorhandensein der Hand an der Tastfläche anzeigt, nicht vorliegt. Nur für den Fall, daß die Hand an der Tastfläche bzw. in deren unmittelbarer Nähe ist, wird das erste Auslösesignal ausgegeben, welches notwendig ist, um die Hupanlage in Betrieb zu setzen.

Wenn des weiteren die zweite Auslöseeinheit als Drucksensoreinrichtung ausgebildet ist, die im Lenkrad des Kraftfahrzeugs angeordnet ist und mittels der bei einer Druckbeaufschlagung des Lenkrads das zweite Auslösesignal ausgegeben wird, ist sichergestellt, daß allein das Vorhandensein der Hand nahe der Tastfläche nicht ausreichend ist, um die Hupanlage in Betrieb zu setzen. Vielmehr muß auf die Drucksensoreinrichtung ein spürbarer Druck ausgeübt werden, damit diese das zweite Auslösesignal ausgibt. Ein bloßes Vorbeiführen der Hand bzw. Überstreichen der Lenkradoberfläche, bei der die Hand in Anlage oder in unmittelbarer Nähe an die Tastfläche gerät, führt noch nicht zur Inbetriebsetzung der Hupanlage, da bei der vorstehend geschilderten Bewegung der Hand eine Druckbeaufschlagung der Drucksensoreinrichtung nicht erfolgt und diese das zweite Auslösesignal nicht ausgibt. Dieses zweite Auslösesignal wird durch die Drucksensoreinrichtung nur dann ausgegeben, wenn mittels der Hand ein Druck auf die Lenkradoberfläche ausgeübt wird.

Falls in anderer Weise eine mechanische Beanspruchung bzw. eine Druckbeaufschlagung der Drucksensoreinrichtung erfolgt, führt dies nicht zur Inbetriebsetzung der Hupanlage, da es an der weiteren notwendigen Bedingung, nämlich der Ausgabe des ersten Auslösesignals, mangelt, wenn sich die Hand nicht auf der Lenkradoberfläche, d.h. nahe der Tastfläche, befindet. Die Oberflächenabdeckung des Lenkrads kann gestaltet werden, ohne daß auf die Auslösevorrichtung der Hupanlage in irgendeiner Form Rücksicht genommen werden muß. Vorteilhaft ist die Tastfläche der Auslösevorrichtung unmittelbar unterhalb der Oberflächenabdeckung des Lenkrads angeordnet.

Wenn die Tastfläche als sensorgesteuerte Funktionstastfläche ausgebildet ist und eine dielektrische Platte sowie eine darunter angeordnete Elektrode aufweist, kann das erste Auslösesignal bereits generiert werden, wenn sich die Hand bzw. Teile der Hand noch in einer Entfernung von ca. 5 mm von der Oberfläche der Tastfläche befinden. Wie bereits mehrfach erwähnt, wird für diesen Fall die Hupanlage nicht bzw. noch nicht in Betrieb gesetzt, da die Drucksensoreinrichtung noch nicht mit Druck beaufschlagt wird.

Gemäß einer vorteilhaften Weiterbildung weist die Drucksensoreinrichtung mehrere Drucksensoren auf, wobei eine statische Bestimmtheit derjenigen Bauteile, zwischen denen die Drucksensoren angeordnet sind, insbesondere dann erreichbar ist, wenn drei Drucksensoren vorgesehen sind.

Im folgenden wird die Erfindung anhand einer Ausführungsform unter Bezugnahme auf die Zeichnungen näher dargestellt. Es zeigen:
- Figur 1: eine Prinzipdarstellung einer Ausführungsform einer in ein Lenkrad integrierten erfindungsgemäßen Auslösevorrichtung für eine Hupanlage eines Kraft- fahrzeugs; und
- Figur 2: eine Prinzipdarstellung einer Ausführungsform einer Tastfläche der in Figur 1 gezeigten erfindungsgemäßen Auslösevorrichtung.

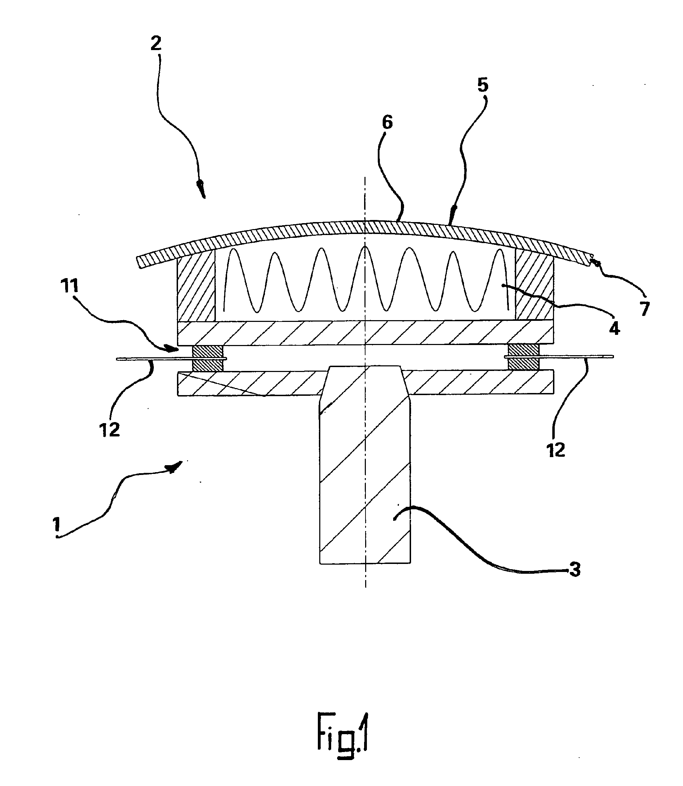

Eine in Figur 1 prinzipiell dargestellte Lenkradanlage 1 eines im übrigen nicht dargestellten Kraftfahrzeugs ist in der im folgenden näher erläuterten Weise mit einer Ausführungsform einer erfindungsgemäßen Auslösevorrichtung für eine Hupanlage des Kraftfahrzeugs ausgerüstet. Ein Lenkrad 2 der Lenkradanlage 1 ruht in üblicher Weise auf einer Lenksäule 3 der Lenkradanlage 1.

Außer der vorstehend bereits erwähnten erfindungsgemäßen Auslösevorrichtung für die Hupanlage ist in das Lenkrad 2 in üblicher Weise ein Airbag 4 integriert.

Eine Lenkradoberfläche 5 wird durch die Außenseite einer beispielsweise aus Leder ausgeführten Oberflächenabdeckung 6 gebildet. Unterhalb der Oberflächenabdeckung 6 befindet sich eine als Sensor gesteuerte Funktionstastfläche ausgebildete Tastfläche 7, die eine Auslöseeinheit der im Falle des erläuterten Ausführungsbeispiels zwei Auslöseeinheiten aufweisenden Auslösevorrichtung bildet.

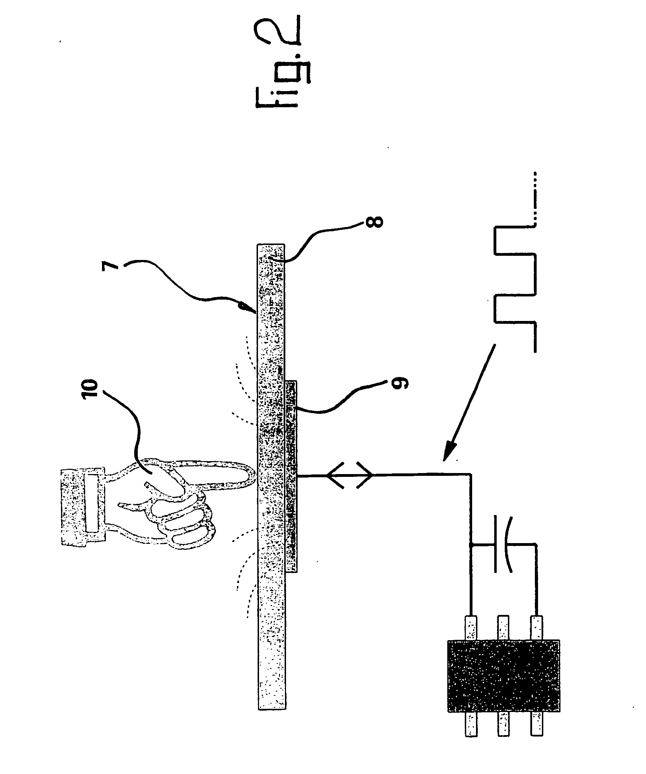

Zum Funktionsprinzip der Tastfläche 7 wird auf Figur 2 Bezug genommen, aus der hervorgeht, daß die Tastfläche 7 eine dielektrische Platte 8 und eine Elektrode 9 aufweist. Mittels der Elektrode ist innerhalb der dielektrischen Platte 8 und oberhalb derselben ein Feld ausgeprägt, welches bei Annäherung einer Hand 10 verändert bzw. gestört wird. Bei Vorhandensein einer derartigen Störung wird, wie in Figur 2 angedeutet, ein erstes Auslösesignal ausgegeben.

Des weiteren ist im Lenkrad 2 eine Drucksensoreinrichtung 11 integriert, die vorzugsweise drei Drucksensoren 12 aufweisen kann, von denen in Figur 1 zwei Drucksensoren gezeigt sind. Wird, z.B. mittels einer Hand, auf die Lenkradoberfläche 5 Druck ausgeübt, wird dies mittels der Drucksensoren 12 erfaßt. Hierdurch wird ein zweites Auslösesignal generiert.

Sobald sowohl das erste Auslösesignal der Tastfläche 7 als auch das zweite Auslösesignal der Drucksensoreinrichtung 11 ausgegeben werden, wird mittels der vorstehend geschilderten Auslösevorrichtung die in den Figuren nicht gezeigte Hupanlage des Kraftfahrzeugs in Betrieb gesetzt. Falls nur das erste Auslösesignal der Tastfläche 7 vorliegt oder falls nur das zweite Auslösesignal der Drucksensoreinrichtung 11 vorliegt, wird die Hupanlage des Kraftfahrzeugs nicht in Betrieb gesetzt. Mittels der vorstehend geschilderten Auslösevorrichtung für die Hupanlage ist eine Ausgestaltung des Lenkrads 2 möglich, bei der an der Lenkradoberfläche keinerlei Spalte od.dgl. mehr erforderlich sind. Die Lenkradoberfläche kann flüssigkeitsdicht gestaltet werden.

## Patentansprüche

1. Auslösevorrichtung für eine Hupanlage eines Kraftfahrzeugs, die in bzw. an einem Lenkrad (2) des Kraftfahrzeugs integriert ist, mit zumindest einer ersten Auslöseeinheit (7), mittels der ein mit einem beabsichtigten Hupvorgang einhergehender Parameter erfass- und bei Erfassen eines solchen Parameters ein erstes Auslösesignal ausgebbar ist, **dadurch gekennzeichnet, dass** die Auslösevorrichtung eine zweite Auslöseeinheit (11) aufweist, mittels der ein weiterer mit einem beabsichtigten Hupvorgang einhergehender Parameter erfassund ein zweites Auslösesignal ausgebbar ist, und dass mittels der Auslösevorrichtung (7, 11) die Hupanlage in Betrieb setzbar ist, wenn sowohl das erste Auslösesignal von der ersten Auslöseeinheit (7) als auch das zweite Auslösesignal von der zweiten Auslöseeinheit (11) ausgegeben werden.

2. Auslösevorrichtung nach Anspruch 1, bei der die erste Auslöseeinheit eine Tastfläche (7) ist, mittels der die Anlage einer Hand (10) an einer Lenkradoberfläche (5) erfassund bei Erfassen der Anlage der Hand (10) an der Lenkradoberfläche (5) das erste Auslösesignal ausgebbar ist.

3. Auslösevorrichtung nach Anspruch 1 oder 2, bei der die zweite Auslöseeinheit eine Drucksensoreinrichtung (11) ist, die im Lenkrad (2) des Kraftfahrzeugs angeordnet ist und mittels der bei einer Druckbeaufschlagung des Lenkrads (2) das zweite Auslösesignal ausgebbar ist.

4. Auslösevorrichtung nach Anspruch 2 oder 3, deren Tastfläche (7) unmittelbar unterhalb einer Oberflächenabdeckung (6) des Lenkrads (2) angeordnet ist.

5. Auslösevorrichtung nach einem der Ansprüche 2 bis 4, deren Tastfläche (7) als sensorgesteuerte Funktionstastfläche ausgebildet ist und eine dielektrische Platte (8) und eine darunter angeordnete Elektrode (9) aufweist.

6. Auslösevorrichtung nach einem der Ansprüche 3 bis 5, deren Drucksensoreinrichtung (11) mehrere, vorzugsweise drei, Drucksensoren (12) aufweist.

## Claims

1. Triggering device for a horn system of a motor vehicle, which is integrated in or on a steering wheel (2) of the motor vehicle, having at least one first triggering unit (7), by means of which a parameter associated with an intended horn-sounding process can be detected and, when such a parameter is detected, a first triggering signal can be output, **characterised in that** the triggering device has a second triggering unit (11), by means of which a further parameter associated with an intended horn-sounding process can be detected and a second triggering signal can be output, and that the horn system can be put into operation by means of the triggering device (7, 11) if both the first triggering signal is output by the first triggering unit (7) and the second triggering signal is output by the second triggering unit (11).

2. Triggering device according to Claim 1, in which the first triggering unit is a touch surface (7), by means of which the placing of a hand (10) on a steering wheel surface (5) can be detected and, when the placing of the hand (10) on the steering wheel surface (5) is detected, the first triggering signal can be output.

3. Triggering device according to Claim 1 or 2, in which the second triggering unit is a pressure sensor means (11), which is arranged in the steering wheel (2) of the motor vehicle and by means of which the second triggering signal can be output when pressure is exerted on the steering wheel (2).

4. Triggering device according to Claim 2 or 3, the touch surface (7) of which is arranged directly below a surface cover (6) of the steering wheel (2).

5. Triggering device according to one of Claims 2 to 4, the touch surface (7) of which is configured as a sensor-controlled functional touch surface and has a dielectric plate (8) and an electrode (9) arranged therebeneath.

6. Triggering device according to one of Claims 3 to 5, the pressure sensor means (11) of which has several, preferably three, pressure sensors (12).

## Revendications

1. Dispositif de déclenchement pour un système d'avertisseur sonore d'un véhicule automobile, qui est intégré dans, resp. sur un volant de direction (2) du véhicule automobile, comportant au moins une première unité de déclenchement (7), au moyen de laquelle un paramètre intervenant dans un processus envisagé d'avertissement sonore est détecté et un premier signal de déclenchement peut être émis lors de la détection d'un tel paramètre, en ce que le dispositif de déclenchement présente une deuxième unité de déclenchement (11), au moyen de laquelle un paramètre supplémentaire intervenant dans un processus envisagé d'avertissement sonore est détecté et un deuxième signal de déclenchement peut être émis, et en ce que au moyen du dispositif de déclenchement (7, 11) le système d'avertissement sonore peut être mis en service, quand tant le premier signal de déclenchement est émis par la première unité de déclenchement (7) que tant le deuxième signal de déclenchement est émis par la deuxième unité de déclenchement (11).

2. Dispositif de déclenchement selon la revendication 1, dans lequel la première unité de déclenchement est une surface tactile (7), au moyen de laquelle le positionnement d'une main (10) sur une surface de volant de direction (5) est détecté et lors de la détection du positionnement de la main (10) sur la surface de volant de direction (5) le premier signal de déclenchement peut être émis.

3. Dispositif de déclenchement selon la revendication 1 ou 2, dans lequel la deuxième unité de déclenchement est un dispositif de capteur de pression (11), qui est disposé dans le volant de direction (2) du véhicule automobile et au moyen duquel en présence d'une sollicitation par une pression du volant de direction (2) le deuxième signal de déclenchement peut être émis.

4. Dispositif de déclenchement selon la revendication 2 ou 3, dont la surface tactile (7) est disposée directement au dessous d'un revêtement de surface (6) du volant de direction (2).

5. Dispositif de déclenchement selon une des revendications 2 à 4, dont la surface tactile (7) est réalisée comme une surface tactile fonctionnelle commandée par capteur et présente une plaque diélectrique (8) et une électrode (9) disposée au dessous.

6. Dispositif de déclenchement selon une des revendications 3 à 5, dont le dispositif de capteur de pression (11) présente plusieurs capteurs de pression (12), de préférence trois.
